# EUROPÄISCHE PATENTSCHRIFT

(11) **EP 3 646 762 B1**
(45) Veröffentlichungstag und Bekanntmachung des Hinweises auf die Patenterteilung: **30.06.2021**
(21) Anmeldenummer: 19180066.3
(22) Anmeldetag: 13.06.2019
(51) Int. Cl.: A47J 37/04, A47J 37/07, F23D 14/14

(54) **DREHSPIESS-GASGRILLGERÄT**
ROTATING SPIT GAS GRILLING DEVICE
GRIL À GAZ À TOURNEBROCHE

(30) Priorität: 01.11.2018 DE 202018106243 U
(43) Veröffentlichungstag der Anmeldung: 06.05.2020
(73) Patentinhaber: Potis GmbH & Co. KG, 37079 Göttingen (DE)
(72) Erfinder: SITOUDIS, Konstantinos, 37077 Göttingen (DE)
(74) Vertreter: REHBERG HÜPPE + PARTNER

(56) Entgegenhaltungen:
- DE-A1- 1 404 585
- DE-U1- 29 615 432
- GB-A- 1 446 331
- GB-A- 2 486 888
- US-A- 3 202 204

## Beschreibung

### TECHNISCHES GEBIET DER ERFINDUNG

Die Erfindung betrifft ein Drehspieß-Gasgrillgerät, wie dieses beispielsweise für die Zubereitung von Gyros, Döner oder Schawarma verwendet wird. Hierbei wird ein über einen rotierenden Drehspieß gehaltener Fleischballen zum Garen und Grillen desselben in einem Wärmestrahlungsbereich einer Grillfläche des Drehspieß-Gasgrillgeräts gedreht.

### STAND DER TECHNIK

Die Druckschrift GB 1 446 331 A offenbart einen Strahlungsbrenner, der zum Kochen oder Grillen verwendet werden kann. Der Strahlungsbrenner verfügt über eine ringförmige Kammer mit rechteckigem Kammerverlauf und über den Kammerverlauf konstantem Querschnitt. Mit dem Boden der Kammer ist ein umlaufender Verteilerkanal verschweißt, der dem Verlauf der Kammer folgt. An einer Stelle mündet in den Verteilerkanal ein Mischrohr, über welches dem Verteilerkanal ein brennbares Gas-Luft-Gemisch zugeführt werden kann. Der Querschnitt des Verteilerkanals nimmt mit zunehmender Entfernung von der Mündung des Mischrohrs in den Verteilerkanal ab. Der Verteilerkanal besitzt einerseits im Umgebungsbereich der Mündung des Mischrohrs zwei erste Austrittsöffnungen, über die das Gas-Luft-Gemisch aus dem Verteilerkanal in die Kammer übertreten kann. Andererseits besitzt der Verteilerkanal auf der gegenüberliegenden Seite zwei zweite Austrittsöffnungen, über die das Gas-Luft-Gemisch auf einer gegenüberliegenden Seite in die Kammer übertreten kann. Die ersten Austrittsöffnungen verfügen über einen größeren Öffnungsquerschnitt als die zweiten Austrittsöffnungen. Das Gas-Luft-Gemisch kann dann auf der Strahlungsseite des Strahlungsbrenners aus einer metallischen Gewebeschicht austreten und verbrannt werden.

Die Druckschrift DE 1 404 585 A1 offenbart einen Strahlungsbrenner, bei dem eine Kammer auf einer Seite durch eine gelochte Platte aus keramischem Material begrenzt ist. Durch die Verwendung mehrerer derartiger Platten nebeneinander kann eine Brennerfläche geschaffen werden mit den gewünschten Abmessungen, die hier mit 2,7 dm² angegeben ist. Vor der Platte aus dem keramischen Material ist ein Schirm aus geflochtenem Metalldraht, insbesondere aus einer Nickel-Chrom-Legierung, in einem Abstand von 9 mm angeordnet. Ein brennbares Gemisch wird erzeugt, indem ein gasförmiger Brennstoff aus einer Zuführleitung durch eine Einspritzdüse in das Mundstück eines Venturi-Rohres eingespritzt wird, welches den Mischer bildet. Das VenturiRohr mündet in ein hinteres Teil des Gehäuses des Strahlungsbrenners, von wo das brennbare Gemisch durch die Bohrungen der Platte aus keramischem Material und dem Schirm hindurchtritt, um außenliegend von dem Strahlungsbrenner verbrannt zu werden.

US 3,202,204 A offenbart eine eingangsseitige Einstelleinrichtung, über welche die einem brennbaren Gas beigemischte Luftmenge eingestellt werden kann. Von dieser Einstelleinrichtung gelangt das Gas-Luft-Gemisch über ein U-förmiges Zuführrohr mit sich zunehmend und kontinuierlich vergrößerndem Querschnitt zu einer Brennkammer, von der das Gas-Luft-Gemisch über ein Drahtgeflecht austreten kann, um verbrannt zu werden.

DE 296 15 432 U1 offenbart eine Grilleinrichtung, bei der über einen Elektromotor über mehrere miteinander kämmende Zahnräder mehrere parallele und vertikal angeordnete Grillspieße angetrieben werden können. Das Grillen von auf dem Grillspieß angeordneten Lebensmitteln wie Fleisch erfolgt durch eine in DE 296 15 432 U1 nicht näher beschriebene Heizeinrichtung. Die Heizeinrichtung verfügt über ein zumindest in einer Seitenansicht kastenförmiges Design. Ein Zuführschlauch führt offensichtlich ein Gas über Zuführelemente der Heizeinrichtung zu, wobei die Zuführelemente im Bereich einer Stufe der kastenförmigen Heizeinrichtung hinter einer Brennerplatte der Heizeinrichtung angeordnet sind.

### AUFGABE DER ERFINDUNG

Der vorliegenden Erfindung liegt die Aufgabe zugrunde, ein Drehspieß-Gasgrillgerät vorzuschlagen, das insbesondere hinsichtlich
- der Bauraumverhältnisse,
- der möglichen Heizleistung einer Grilleinheit,
- der möglichen Größe einer Grillfläche einer Grilleinheit,
- einer Gewährleistung einer Homogenität der Wärmeentwicklung und der Verbrennungsbedingungen im Bereich einer Grillfläche,
- einer Gewährleistung eines Einsatzes mehrerer Grilleinheiten mit einer durchgehenden Gesamt-Grillfläche,
- einer Gewährleistung einer guten Durchmischung eines Brenngases mit Umgebungsluft,
- einer konstruktiv einfachen und/oder robusten Ausgestaltung
verbessert ist.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Im erfindungsgemäßen Drehspieß-Gasgrillgerät finden Grilleinheiten Einsatz, die jeweils wie folgt ausgebildet sind: Die Grilleinheit weist eine Grillfläche auf, die (bei entsprechender Versorgung mit einem Mischgas und Befeuerung) Heizwärme erzeugt, mittels welcher der Fleischballen gegart und gegrillt werden kann. Des Weiteren verfügt die Grilleinheit über eine Mischgas-Kammer, die grundsätzlich durchgehend ausgebildet sein kann oder unterteilt sein kann, insbesondere in eine Vorkammer und eine Hauptkammer. Die Mischgas-Kammer ist auf der der Grillfläche zugewandten Seite durch mindestens eine Brennerplatte begrenzt. Die Brennerplatte ist für das in der Mischgas-Kammer angeordnete Mischgas durchlässig. Beispielsweise kann es sich bei der Brennerplatte um eine gleichmäßig verteilte Bohrungen für den Durchtritt des Gases aufweisende Keramikplatte handeln. Möglich ist, dass mehrere Brennerplatten gleicher Größe die Mischgas-Kammer auf der der Grillfläche zugewandten Seite begrenzen.

Erfindungsgemäß weist die Mischgas-Kammer einen Teilabschnitt mit einer verringerten Tiefe auf. Um lediglich einige die Erfindung nicht beschränkende Beispiele zu nennen, kann die Tiefe in diesem Teilabschnitt der Mischgas-Kammer weniger als 50 %, weniger als 60 %, weniger als 70 % oder sogar weniger als 75 % der Tiefe der Mischgas-Kammer in dem Bereich außerhalb des Teilabschnittes mit der verringerten Tiefe, der im Folgenden auch als "anderer Teilabschnitt" bezeichnet wird, betragen. Erfindungsgemäß ist festgestellt worden, dass eine gleichmäßige Verteilung des Gases in der Mischgas-Kammer und damit eine Versorgung der Brennerplatte mit dem Gas auch gewährleistet werden kann, wenn die Mischgas-Kammer in einem Teilabschnitt eine verringerte Tiefe aufweist. Der durch den Einsatz des Teilabschnittes mit einer verringerten Tiefe freigewordene Bauraum wird im Rahmen dieser Lösung der der Erfindung zugrundeliegenden Aufgabe dazu genutzt, dass (auf der der mindestens einen Brennerplatte abgewandten Seite der Mischgas-Kammer) hinter dem Teilabschnitt mindestens eine das Brenngas oder Mischgas führende und/oder aufbereitende Komponente angeordnet ist. Hierdurch ergibt sich eine besonders kompakte Bauweise.

Um lediglich einige die Erfindung nicht beschränkende Beispiele zu nennen, kann es sich bei der genannten Komponente um eine Gasleitung, ein Winkelstück, eine Düse, einen Trichter oder eine Mischeinheit, in der ein Brenngas mit Umgebungsluft zu dem für die Mischgas-Kammer bestimmten Mischgas gemischt wird, handeln.

Für die Gestaltung der Geometrie der Mischgas-Kammer und damit die Gewährleistung des Teilabschnitts mit einer verringerten Tiefe können beliebige Geometrien Einsatz finden. Vorzugsweise wird die verringerte Tiefe über eine nicht ebene Ausgestaltung einer Rückwand der Mischgas-Kammer bereitgestellt, wobei diese Rückwand beliebig kurvenförmig geformt sein kann, ebene, gegeneinander abgewinkelte Teilbereiche aufweisen kann u. ä. Für einen besonderen Vorschlag der Erfindung ist die Mischgas-Kammer durch eine Rückwand begrenzt, welche an dem Übergang zu dem Teilabschnitt mit der verringerten Tiefe eine Stufe aufweist. In diesem Fall kann die Rückwand ein erstes Rückwandteil aufweisen und ein zweites Rückwandteil, welches in dem Teilabschnitt ausgebildet ist und parallel zu dem ersten Rückwandteil orientiert ist. Die beiden Rückwandteile sind dann über eine quer hierzu orientierte Stufenwandung miteinander verbunden.

Handelt es sich bei der Komponente, die in dem Teilabschnitt mit der verringerten Tiefe hinter der Mischgas-Kammer abgeordnet ist, um eine Mischeinheit, so schlägt eine Ausführungsform der Erfindung vor, dass die Mischeinheit einen Strömungskanal aufweist, der über eine laterale Öffnung verfügt. Strömt dann ein Brenngas durch den Strömungskanal, nimmt das Brenngas Umgebungsluft durch die laterale Öffnung mit, und es kommt zu einer Vermischung der Umgebungsluft mit dem Brenngas zu einem Brenngas-Umgebungsluft-Gemisch, welches hier auch vereinfacht als "Mischgas" bezeichnet wird. Diese Ausgestaltung der Mischeinheit stellt eine einfache, aber sehr robuste Konstruktion dar, bei welcher u. U. auch eine gute Durchmischung des Brenngases mit der Umgebungsluft gewährleistet ist.

Möglich ist hierbei gemäß einer Ausführungsform, dass die Mischeinheit einen Trichter aufweist. In diesem Fall kann die Mischeinheit über eine Abdeckplatte verfügen. Der Strömungskanal ist in diesem Fall von einer Bohrung der Abdeckplatte, dem Zwischenraum zwischen der Abdeckplatte und dem Trichter und dem Innenraum des Trichters gebildet, der fluchtend zu der Bohrung der Abdeckplatte angeordnet ist. Der Bohrung der Abdeckplatte wird das Brenngas dann auf der dem Trichter abgewandten Seite der Abdeckplatte über eine geeignete Leitung zugeführt. Der Trichter und die beabstandet davon angeordnete Abdeckplatte bilden einen Ringspalt aus, der die laterale Öffnung bildet, durch die das Brenngas in dem Strömungskanal Umgebungsluft mitnehmen kann. Der Trichter kann hierbei bspw. einen rechteckigen, quadratischen oder runden Querschnitt aufweisen.

Für einen Vorschlag wird eine Grilleinheit vorgeschlagen, die bei einer Verwendung eines Gases in Form eines herkömmlichen Flüssiggases oder Erdgases eine Heizleistung hat, die größer ist als 7,0 kW. Vorzugsweise ist sogar die Heizleistung größer als 8,0 kW, größer als 9,0 kW, größer als 10,0 kW, größer als 11,0 kW, größer als 12,0 kW oder sogar größer als 13,0 kW. Alternativ oder zusätzlich kann die Grilleinheit eine Grillfläche aufweisen, deren Fläche größer ist als 400 cm². Vorzugsweise ist die Grillfläche sogar größer als 450 cm², größer als 500 cm², größer als 550 cm², größer als 600 cm², größer als 650 cm², größer als 700 cm², größer als 750 cm², größer als 800 cm², größer als 850 cm² oder größer als 900 cm². Die Erfindung begegnet somit dem Vorteil des Fachmanns, dass die Bereitstellung einer Heizleistung der vorgenannten Größe und/oder einer Grillfläche mit der vorgenannten Fläche mittels einer einzigen Grilleinheit nicht möglich ist. Durch die Vergrößerung der Heizleistung und/oder der Grillfläche kann die Zahl der Grilleinheiten bei einer erforderlichen großen Heizleistung und/oder Grillfläche reduziert werden, wodurch sich einerseits der Bauaufwand verringert und andererseits ein Aufwand für ein Zünden und die Befeuerung der jeweiligen Grilleinheiten reduziert.

Für einen weiteren (alternativen oder kumulativen) Vorschlag strömt das Mischgas nicht entsprechend dem Stand der Technik unmittelbar von einer Zuführleitung in eine Mischgas-Kammer und von dieser durch die Brennerplatte. Vielmehr ist für diese Lösung die Mischgas-Kammer durch eine Trennwandung in eine Vorkammer und eine stromabwärts der Vorkammer angeordnete Hauptkammer unterteilt, wobei die Hauptkammer dann vorzugsweise durch die mindestens eine Brennerplatte begrenzt ist. Möglich ist hierbei, dass sich die Vorkammer und die Hauptkammer über dieselbe Längserstreckung und/oder Quererstreckung erstrecken, wobei in diesem Fall vorzugsweise die Längserstreckung und Quererstreckung der Längserstreckung und Quererstreckung der Grillfläche oder der Grilleinheit entsprechen. Die Vorkammer ist für diese Lösung über Übertrittsquerschnitte mit der Hauptkammer verbunden. Hierbei werden die Übertrittsquerschnitte durch Ausnehmungen der Trennwandung gebildet und/oder durch Zwischenräume zwischen der Trennwandung und einem Gehäuse der Grilleinheit oder der Mischgas-Kammer. Die Vorkammer kann sich dabei über dieselbe Fläche erstrecken wie die Hauptkammer. Möglich ist aber auch, dass sich die Vorkammer lediglich in dem Bereich der Mischkammer erstreckt, welche nicht der Teilabschnitt mit der verringerten Tiefe ist. Bei den Übertrittsquerschnitten kann es sich um Poren, Bohrungen, Ausnehmungen, Ausschnitte beliebiger Kontur u. ä. der Trennwandung handeln.

Für eine Ausführungsform ändert sich die Größe und/oder die Flächendichte der Übertrittsquerschnitte über die Längserstreckung der Mischgas-Kammer, die vorzugsweise der Ausströmrichtung des Gases in die Vorkammer entspricht und vorzugsweise einer vertikalen Ausrichtung der Grilleinheit bei dessen Einsatz in einem Drehspieß-Gasgrillgerät entspricht. Hierbei wird die Flächendichte so ermittelt, dass in dem relevanten Bereich der Trennwandung eine Teilfläche mit einer vorgegebenen Fläche festgelegt wird. Die Flächendichte ist dann das Verhältnis der (Gesamt-)Fläche der Übertrittsquerschnitte der Trennwandung im Bereich der Teilfläche zu der Fläche der Teilfläche. Für das Extrembeispiel, dass kein Übertrittsquerschnitt in der Teilfläche vorhanden ist, beträgt somit die Flächendichte 0, während für das andere Extrembeispiel, dass sich die Übertrittsquerschnitte über die gesamte Teilfläche erstrecken, so dass in der Teilfläche kein Material der Trennwandung mehr vorhanden ist, die Flächendichte 1 beträgt. Erfindungsgemäß ergibt sich somit mit unterschiedlichen Teilflächen in Richtung der Längserstreckung eine unterschiedliche derartige Flächendichte. Hierbei kann die Flächendichte über die Längserstreckung kontinuierlich oder diskontinuierlich zu- oder abnehmen oder auch abnehmen oder wieder zunehmen oder einen beliebigen Verlauf über die Längserstreckung aufweisen. Um lediglich ein die Erfindung nicht beschränkendes Beispiel zu nennen, können die von Ausnehmungen der Trennwandung gebildeten Übertrittsquerschnitte in vertikaler Richtung nach oben eine sicher verringernde Flächendichte aufweisen.

Für eine weitere Ausführungsform der Grilleinheit weist die Vorkammer eine Eintrittsöffnung für das Mischgas auf, wobei der Eintrittsöffnung das Mischgas über eine geeignete Zuführleitung, beispielsweise von einer Mischeinheit, zugeführt wird, die sich u. U. auch zumindest teilweise durch die Vorkammer erstrecken kann, so dass die Eintrittsöffnung auch in der Mitte der Vorkammer angeordnet sein kann. Möglich ist hierbei, dass sich die Größe und/oder die Flächendichte der Übertrittsquerschnitte mit zunehmender Entfernung von der Eintrittsöffnung vergrößert. Dies kann in Richtung der Längserstreckung sowohl in Austrittsrichtung des Gases aus der Eintrittsöffnung als auch in entgegengesetzter Richtung gelten.

Für die Art der Ausgestaltung der Trennwandung zwischen der Vorkammer und der Mischgas-Kammer gibt es vielfältige Möglichkeiten. Für einen Vorschlag der Erfindung sind die Vorkammer und die Hauptkammer durch ein Blech voneinander getrennt, welches in diesem Fall die Trennwandung bildet. Die Übertrittsquerschnitte sind dann von Bohrungen oder beliebigen Ausnehmungen des Bleches ausgebildet. Die Größe und/oder die Flächendichte der Bohrungen oder Ausnehmungen verändert sich dabei über die Längserstreckung.

Von besonderer Bedeutung ist u. U. die Art der Einleitung des Gases in die Vorkammer, wobei hier auch eine Durchmischung des Mischgases, also des Brenngases und der Umgebungsluft, stromaufwärts der Eintrittsöffnung sowie auch innerhalb der Vorkammer selbst zu beachten ist. Für einen Vorschlag der Erfindung ist stromaufwärts der Eintrittsöffnung der Vorkammer eine düsenartige oder trichterartige Zuführleitung angeordnet. Es hat sich gezeigt, dass hierdurch die Durchmischung des Mischgases verbessert werden kann, was letzten Endes zu einer Homogenisierung der Brennbedingungen des Mischgases führt.

Grundsätzlich kann die Eintrittsöffnung an beliebiger Stelle der Längserstreckung der Vorkammer angeordnet sein. Für einen weiteren Vorschlag der Erfindung ist die Eintrittsöffnung im Bereich von 20 % bis 80 % der Längserstreckung der Vorkammer angeordnet. Handelt es sich um eine Grilleinheit mit einer Mischgas-Kammer, welche in einem Teilabschnitt eine verringerte Tiefe aufweist, während der andere Teilabschnitt eine größere Tiefe aufweist, kann die Eintrittsöffnung auch im Bereich von 20 % bis 80 %, insbesondere 30 % bis 70 % oder 40 % bis 60 % der Längserstreckung des anderen Teilabschnittes angeordnet sein.

Grundsätzlich kann die Mischgas-Kammer und können die Vorkammer und die Hauptkammer einen beliebigen, in Richtung der Längserstreckung konstanten oder variierenden Querschnitt aufweisen. Für eine Ausführungsform der Erfindung weist die Mischgas-Kammer zumindest in einem Teil ihrer Längserstreckung einen rechteckigen Querschnitt auf. In diesem Fall kann die Hauptkammer in dem genannten rechteckigen Querschnitt U-förmig oder V-förmig ausgebildet sein. Die Seitenschenkel des U oder V schließen dabei zumindest einen Teilquerschnitt der Vorkammer lateral ein. An den Grundschenkel des U oder den Scheitelpunkt des V grenzt die mindestens eine Brennerplatte an. Hierbei entspricht in dem Querschnitt die Dicke der Schenkel des U oder V der Quererstreckung der Hauptkammer in diesem Querschnitt. Beliebige Abwinklungen der Seitenschenkel des U oder V sind dabei im Rahmen der Erfindung möglich, wobei auch die Seitenschenkel des U oder V und ein etwaiger Grundschenkel des U gekrümmt, kurvenförmig oder abgewinkelt ausgebildet sein kann. Schließlich kann sich auch die Dicke der Schenkel des U oder V beliebig über die Längserstreckung desselben verändern. Für den Verlauf des Querschnitts der Hauptkammer in Richtung der Längserstreckung derselben gibt es im Rahmen der Erfindung vielfältige Möglichkeiten. So kann beispielsweise der Querschnitt über die Längserstreckung konstant sein oder einen beliebigen Verlauf aufweisen.

Für einen Vorschlag der Erfindung weist die Hauptkammer in einem ersten Querschnitt, der in dem Teilabschnitt der Mischgas-Kammer mit verringerter Tiefe angeordnet ist, in der Mitte (insbesondere im Bereich des Scheitelpunkts des V-förmigen Querschnitts oder im Bereich des Grundschenkels des U-förmigen Querschnitts) eine Erstreckung in Richtung der Brennerplatte auf, die ungefähr einer Erstreckung der Hauptkammer in einem zweiten Querschnitt in dem anderen Teilabschnitt der Mischgas-Kammer in der entsprechenden Mitte in Richtung der Brennerplatte entspricht. Hingegen verfügt die Hauptkammer in dem ersten Querschnitt außen (insbesondere im Bereich der Seitenschenkel des V-förmigen Querschnitts oder im Bereich der Seitenschenkel des U-förmigen Querschnitts) über eine Erstreckung in Richtung der Brennerplatte, die kleiner ist als die Erstreckung der Hauptkammer in dem zweiten Querschnitt außen in Richtung der Brennerplatte. Im Rahmen der Erfindung werden unter "ungefähr entsprechenden Erstreckungen" Erstreckungen verstanden, welche um weniger als 20 %, weniger als 15 %, weniger als 10 % oder weniger als 5 % voneinander abweichen oder die sogar gleich groß ausgebildet sind. Hingegen werden unter "kleineren Erstreckungen" Erstreckungen verstanden, die um mehr als 20 %, mehr als 30 %, mehr als 40 %, mehr als 50 % oder sogar mehr als 60 % kleiner sind.

Für die Ausgestaltung des Stroms des Mischgases von der Vorkammer in die Hauptkammer und eine etwaige Aufteilung dieses Stromes in unterschiedliche Teilströme gibt es im Rahmen der Erfindung vielfältige Möglichkeiten. Für einen Vorschlag der Erfindung verzweigt ein Strom des Mischgases von der Vorkammer in die Hauptkammer in zwei Teilströme. Die beiden Teilströme strömen auf gegenüberliegenden Seiten mit auseinander gerichteten Strömungskomponenten in die Hauptkammer ein. Das Einströmen des Mischgases mittels zwei Teilströmen in die Hauptkammer kann die gleichmäßige Befüllung der Hauptkammer mit dem Mischgas gewährleisten. Die auseinander gerichteten Strömungskomponenten, welche u. U. auch eine mehrfache Umlenkung des Mischgases einerseits für die Erzeugung der beiden Teilströme und andererseits für die Umlenkung der auseinander gerichteten Strömungskomponenten erfordern, können die Durchmischung weiter verbessern.

Ein weiterer Aspekt der Erfindung widmet sich der Ausrichtung der Grilleinheit und der Komponenten derselben. Für diese Ausgestaltung der Grilleinheit ist eine Längserstreckung der Grilleinheit größer als eine Quererstreckung der Grilleinheit. Die Zuführleitung, aus welcher das Mischgas im Fall des Vorhandenseins einer Vorkammer in die Vorkammer strömt oder aus welcher das Mischgas unmittelbar in die Mischgas-Kammer strömt, ist in Richtung der Längserstreckung orientiert. In einem erfindungsgemäßen Drehspieß-Gasgrillgerät ist die Längserstreckung derartiger Grilleinheiten vertikal orientiert.

Erfindungsgemäß sind in dem Drehspieß-Gasgrillgerät zwei oder mehr Grilleinheiten eingesetzt, wie diese zuvor spezifiziert worden sind. Die Grilleinheiten sind vertikal übereinander angeordnet, was derart erfolgt, dass sich Grillflächen der Grilleinheiten zu einer durchgehenden Gesamt-Grillfläche ergänzen (wobei aber zwischen den Grillflächen noch eine Art Rahmen oder Einfassung der Grilleinheiten verbleiben kann). Unter Umständen ergeben sich verbesserte Bauraumbedingungen, wenn die Mischgas-Kammer einen Teilabschnitt mit einer verringerten Tiefe aufweist, in welchem dann die mindestens eine das Brenngas oder Mischgas führende und/oder aufbereitende Komponente angeordnet ist. Unter Umständen kann erst hierdurch ermöglicht werden, dass die einzelnen vertikal übereinander angeordneten Grilleinheiten mit ihren Grillflächen unmittelbar aneinander anschließen. Durch die u. U. im Rahmen der Erfindung erfolgende Vergrößerung der Heizleistung und/oder der Grillfläche kann so mit wenigen Grilleinheiten eine große Gesamt-Grillfläche und/oder eine große Gesamt-Heizleistung bereitgestellt werden.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch in einer Seitenansicht ein Drehspieß-Gasgrillgerät, welches mit einer Grilleinheit ausgestattet ist.
- **Fig. 2**: zeigt das Drehspieß-Gasgrillgerät gemäß Fig. 1 in einer Vorderansicht.
- **Fig. 3**: zeigt das Drehspieß-Gasgrillgerät gemäß Fig. 1 und 2 in einer Draufsicht.
- **Fig. 4**: zeigt eine Grilleinheit des Drehspieß-Gasgrillgeräts gemäß Fig. 1 bis 3 in einer Vorderansicht.
- **Fig. 5**: zeigt die Grilleinheit gemäß Fig. 4 in einer Vorderansicht mit einem demontierten Verbrennungsgitter.
- **Fig. 6**: zeigt die Grilleinheit gemäß Fig. 4 und 5 in einer Vorderansicht mit demontiertem Verbrennungsgitter und demontierten Brennerplatten.
- **Fig. 7**: zeigt die Grilleinheit gemäß Fig. 4 bis 6 in einer Seitenansicht.
- **Fig. 8**: zeigt einen Querschnitt VIII-VIII der Grilleinheit gemäß Fig. 4 bis 7 bei einem Schnittverlauf gemäß Fig. 6.
- **Fig. 9**: zeigt einen Querschnitt IX-IX der Grilleinheit gemäß Fig. 4 bis 7 bei einem Schnittverlauf gemäß Fig. 6.
- **Fig. 10**: zeigt die Grilleinheit gemäß Fig. 4 bis 9 in einem Schnitt X-X bei einem Schnittverlauf gemäß Fig. 6.
- **Fig. 11**: zeigt in einer räumlichen Ansicht ein Blech, welches in einer Grilleinheit gemäß Fig. 4 bis 10 eine Trennwandung zwischen einer Vorkammer und einer Hauptkammer bildet.
- **Fig. 12**: zeigt in einer Vorderansicht ein Drehspieß-Gasgrillgerät, bei welchem zwei Grilleinheiten mit durchgehender Gesamt-Grillfläche vertikal übereinander angeordnet sind.
- **Fig. 13**: zeigt in einer Seitenansicht das Drehspieß-Gasgrillgerät gemäß Fig. 12.

### FIGURENBESCHREIBUNG

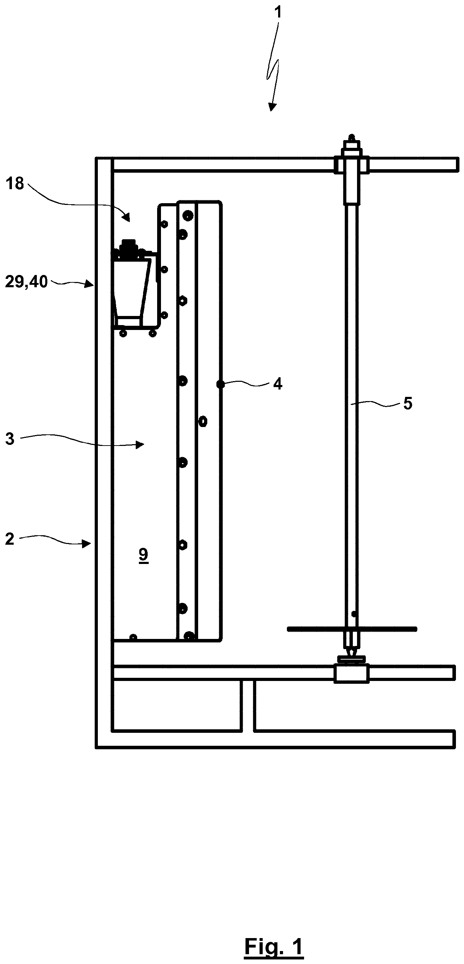

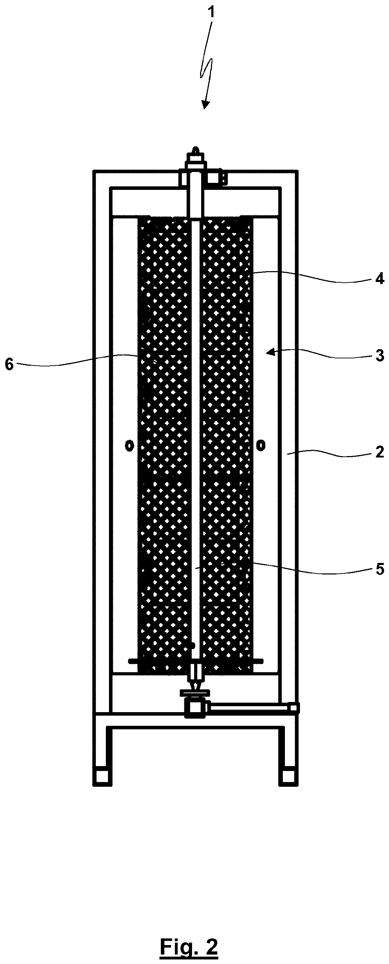

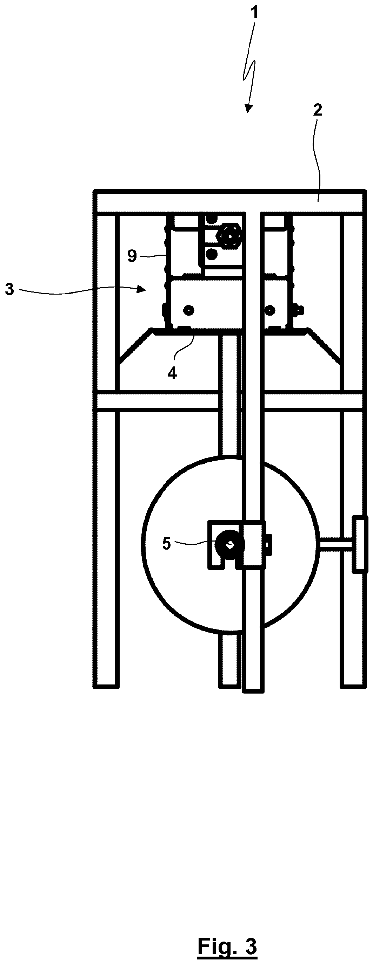

**Fig. 1 bis 3** zeigen ein Drehspieß-Gasgrillgerät 1. Das Drehspieß-Gasgrillgerät 1 verfügt über einen Rahmen 2. An dem Rahmen 2 ist bei vertikaler Orientierung der Längsachse, die hier auch als Längserstreckung bezeichnet wird, eine Grilleinheit 3 gehalten. Die Grilleinheit 3 bildet eine Grillfläche 4 aus. Des Weiteren ist an dem Rahmen 2 drehbar und auswechselbar ein Grillspieß 5 gehalten, auf welchem ein Fleischballen (hier nicht dargestellt) angeordnet werden kann. In den Fig. 1 bis 3 ist ein Motor, welcher die Rotationsbewegung des Grillspießes 5 erzeugt, nicht dargestellt. Die Grillfläche 4 strahlt Wärme zum Garen und Grillen des auf dem Grillspieß 5 angeordneten Fleischballens in Richtung des Grillspießes 5 ab.

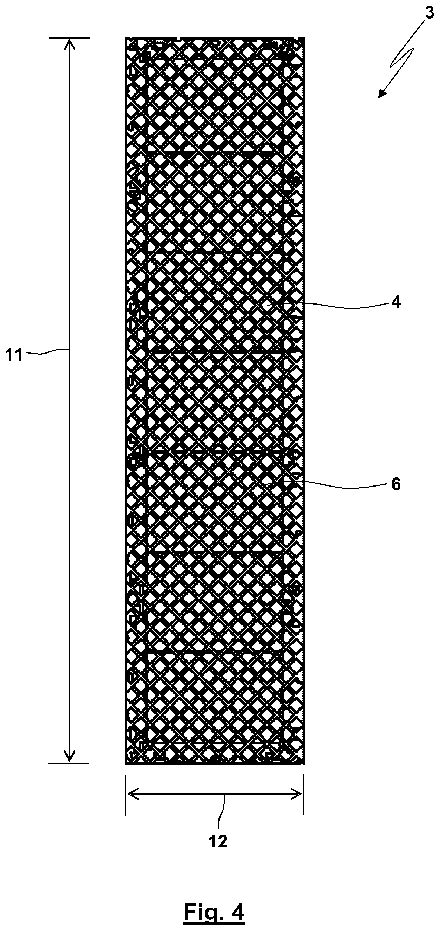

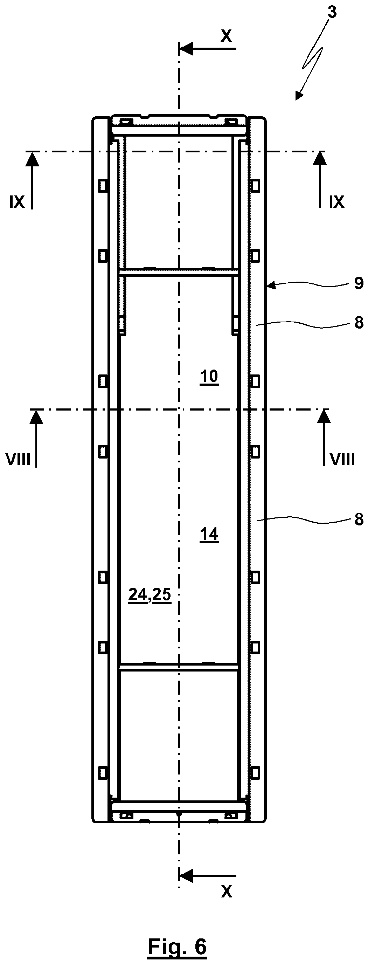

**Fig. 4 bis 10** zeigen die Grilleinheit 3. Wie in Fig. 4 zu erkennen ist, ist die Grilleinheit 3 im Bereich der Grillfläche 4 durch ein Verbrennungsgitter 6 abgedeckt. Für das dargestellte Ausführungsbeispiel ist ein einziges Verbrennungsgitter 6 vorgesehen, welches über die gesamte Grillfläche 4 durchgehend ausgebildet ist.

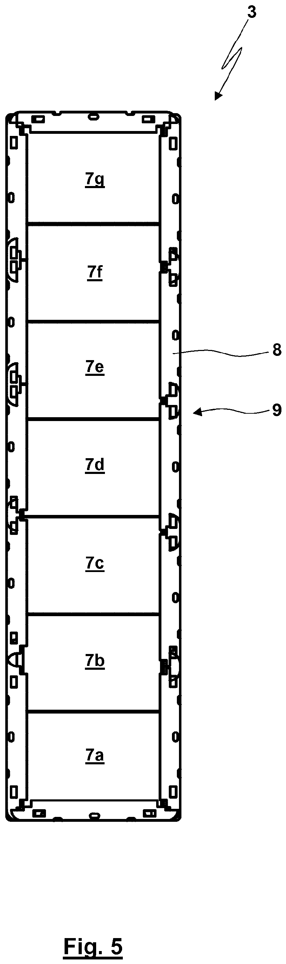

Wie Fig. 5, in welcher das Verbrennungsgitter 6 demontiert ist, zeigt, sind hinter dem Verbrennungsgitter 6 mehrere Brennerplatten 7a bis 7g angeordnet, welche die Grillfläche 4 vollständig überdecken. Die Brennerplatten 7 verfügen jeweils über gleiche Größen. Abweichend zu dem dargestellten Ausführungsbeispiel ist aber auch möglich, dass eine einzige, sich über die gesamte Grillfläche 4 erstreckende Brennerplatte 7 vorgesehen ist.

Der Vergleich der Fig. 4 und 5 zeigt, dass das Verbrennungsgitter 6 über die von den Brennerplatten 7a bis 7g überdeckte Fläche hinausgeht und seitliche Gehäusebereiche 8 eines Gehäuses 9 der Grilleinheit 3 mit überdeckt.

Das Gehäuse 9 ist nach vorne offen und mit mindestens einem Blech gebildet. Das Gehäuse 9 verfügt über einen Innenraum 10, der auf der der Grillfläche 4 zugewandten Seite durch die Brennerplatten 7a bis 7g geschlossen ist.

Eine Längserstreckung 11 der Grilleinheit 3, welche größer ist als eine Quererstreckung 12 der Grilleinheit 3, ist in dem in das Drehspieß-Gasgrillgerät 1 eingebauten Zustand vertikal orientiert. Die Grillfläche 4 der Grilleinheit 3 hat eine Fläche, die sich aus dem Produkt der Längserstreckung 11 und der Quererstreckung 12 ergibt. Die Grilleinheit 1 verfügt über eine Tiefe 13.

Der Innenraum 10 des Gehäuses 3 bildet eine Mischgas-Kammer 14 aus. Die Mischgas-Kammer 14 verfügt über zwei in Richtung der Längserstreckung aneinander angrenzende Teilabschnitte 15, 16. Während der hier untere Teilabschnitt 16 die Tiefe 13 aufweist, verfügt der obere Teilabschnitt 15 über eine verringerte Tiefe 17. In den Teilabschnitten 15, 16 sind die Tiefen 13, 17 jeweils konstant. Die Vorderseiten der Mischgas-Kammer 14 in den Teilabschnitten 15, 16 sind in einer Ebene angeordnet, so dass sich auf der Rückseite hinter dem Teilabschnitt 15 ein Freiraum 18 ergibt. Das Gehäuse 9 verfügt über eine Rückwand 19 mit parallelen Rückwandteilen 20, 21, die jeweils einem Teilabschnitt 15, 16 zugeordnet sind und über eine Stufenwandung 22 der Rückwand 19 miteinander verbunden sind, so dass sich eine Stufe 23 ergibt.

Die Mischgas-Kammer 14 ist durch eine Trennwandung 24, welche hier als Blech 25 ausgebildet ist, unterteilt in eine Vorkammer 26 und eine Hauptkammer 27, die in Längs- und Querrichtung dieselben Erstreckungen aufweisen.

Der Grilleinheit 3 wird über einen Anschluss 28 für eine Leitung oder einen Schlauch ein Brenngas zugeführt. In einer Mischeinheit 29 wird das Brenngas mit Umgebungsluft zu einem Mischgas gemischt. Von der Mischeinheit 29 gelangt das Mischgas über eine Zuführleitung 30 im Bereich einer Eintrittsöffnung 31 in die Vorkammer 26. Von der Vorkammer 26 strömt das Mischgas über Übertrittsquerschnitte 32a, 32b, ... in Form von Ausnehmungen der Trennwandung 24 und Übertrittsquerschnitte 33, die zwischen der Trennwandung 24 und dem Gehäuse 9 ausgebildet sind, in die Hauptkammer 27. Von der Hauptkammer 27 durchströmt das Mischgas Bohrungen der Brennerplatten 7 und verbrennt auf der der Hauptkammer 27 abgewandten Seite der Brennerplatten 7 im Bereich des Verbrennungsgitters 6.

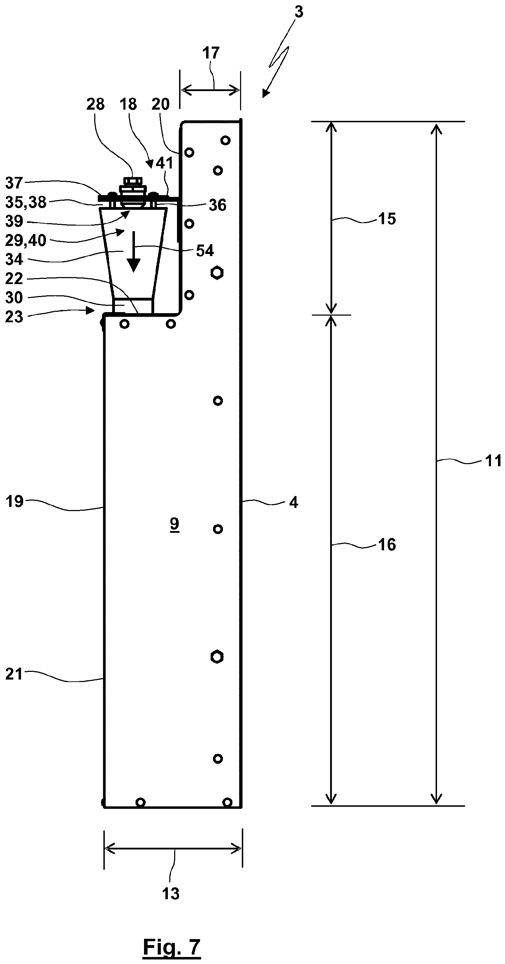

Wie insbesondere in Fig. 7 zu erkennen ist, verfügt die Mischeinheit 29 über einen in die Zuführleitung 30 übergehenden, sich in Richtung der Zuführleitung 30 verjüngenden Trichter 34. Unter Ausbildung eines Ringspaltes 35 ist an dem Trichter 34 über Befestigungsschrauben 36 auf der der Zuführleitung 30 abgewandten Seite eine Abdeckplatte 37 gehalten. Der zwischen der Abdeckplatte 37 und dem Trichter 34 gebildete Ringspalt 35 bildet eine laterale Öffnung 38. Das Brenngas durchströmt die Mischeinheit 29 entlang eines Strömungskanals 39, indem das Brenngas von dem Anschluss 28 durch eine Bohrung der Abdeckplatte 37, den Zwischenraum zwischen der Abdeckplatte 37 und dem Trichter 34 in den Trichter 34 strömt. Infolge der Strömung wird durch die laterale Öffnung 38, hier den Ringspalt 35, Umgebungsluft angesaugt, welche mit dem Brenngas zu dem Mischgas gemischt wird.

Für das dargestellte Ausführungsbeispiel ist die Mischeinheit 29 eine Komponente 40, die in dem Freiraum infolge der verringerten Tiefe 17 hinter dem Teilabschnitt 15 angeordnet ist. Hierbei erstreckt sich die Komponente 40 nicht über die Tiefe 13 der Grilleinheit 3 hinaus und ragt auch nicht nach oben aus dem Teilabschnitt 15 heraus. Die Abdeckplatte 37 ist über einen Befestigungswinkel 41 an der Rückwand 19 befestigt. Die Zuführleitung 30 durchsetzt unter geeigneter Abdichtung eine Ausnehmung der Stufenwandung 22 der Rückwand 19.

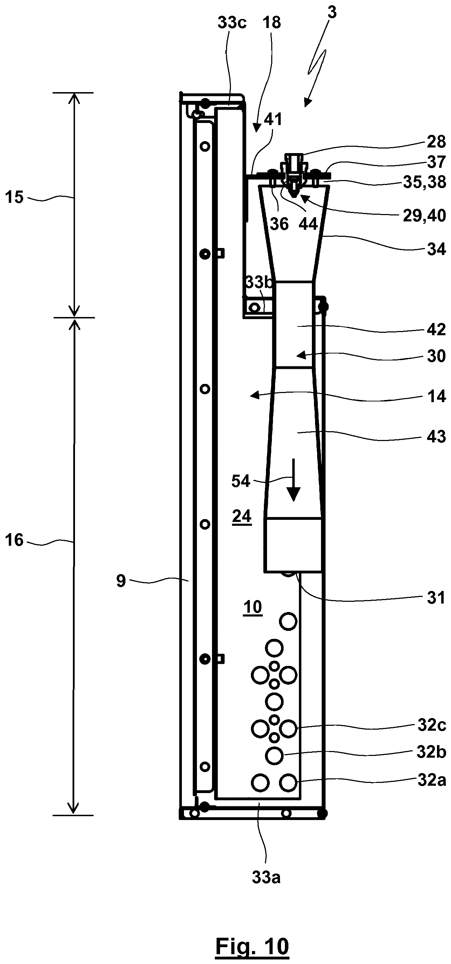

Wie insbesondere in Fig. 10 zu erkennen ist, ist die Zuführleitung 30, hier gemeinsam mit dem Trichter 34, trichter- oder düsenartig ausgebildet mit einer Einschnürung 42 und einer stromabwärts angeordneten kontinuierlichen Querschnittserweiterung 43. Die Eintrittsöffnung 31 am Ende der Zuführleitung 30 ist in Richtung der Längserstreckung der Grilleinheit 3 ungefähr mittig angeordnet.

Möglich ist, dass zwischen dem Anschluss 28 und der Mischeinheit 29 eine Düse oder eine Drossel 44 angeordnet ist, mittels welcher bedarfsgerecht eine Beeinflussung der Strömungsverhältnisse, insbesondere in Abhängigkeit von der Zusammensetzung des Brenngases und/oder der Umgebungsluft, möglich ist.

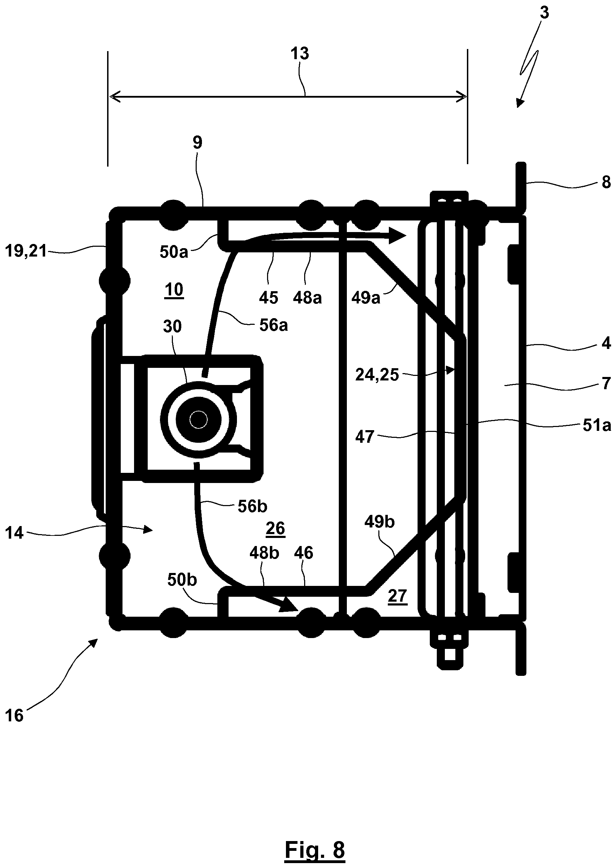

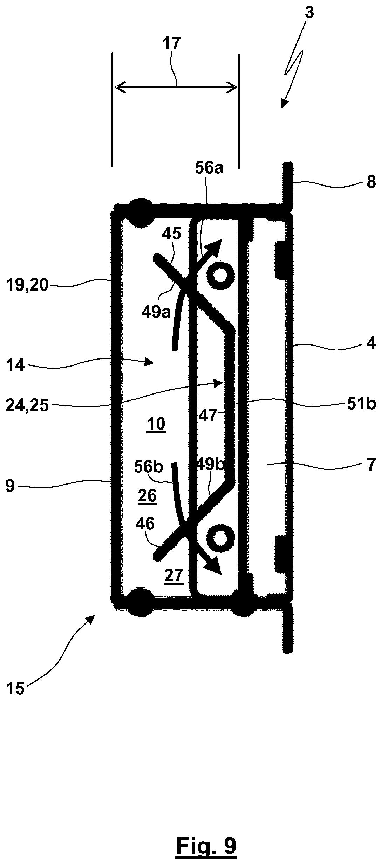

Fig. 8 zeigt einen Querschnitt VIII-VIII durch die Mischgas-Kammer 14 im Bereich des Teilabschnitts 16, während Fig. 9 einen entsprechenden Querschnitt durch die Mischgas-Kammer 14 im Bereich des Teilabschnitts 15 zeigt. In Fig. 8 ist zu erkennen, dass in dem Teilabschnitt 16 die Trennwandung 24 in grober Näherung einen U-förmigen Querschnitt aufweist. Seitenschenkel 45, 46 des U der Trennwandung verfügen jeweils über Seitenschenkelteile 48a, 48b, die parallel zueinander orientiert sind, sowie im Übergangsbereich zu dem Grundschenkel 47 über abgewinkelte Seitenschenkelteile 49a, 49b, die gegenüber dem Grundschenkel 47 und den Seitenschenkelteilen 48a, 48b um einen Winkel von ca. 45° abgewinkelt sind. Die Seitenschenkel 45, 46 verfügen in den freien Endbereichen über in Querrichtung orientierte Abwinklungen 50a, 50b, die passgenau Aufnahme finden in dem Gehäuse 9.

Im Bereich des Teilabschnitts 15 verfügt die Trennwandung 24 über einen Querschnitt, dessen Grundschenkel 47 dem Grundschenkel im Bereich des Teilabschnitts 16 entspricht. Allerdings verfügen hier die Seitenschenkel 45, 46 nicht über die parallel zueinander orientierten Seitenschenkelteile 48a, 48b, sondern ausschließlich über die abgewinkelten Seitenschenkelteile 49a, 49b, welche in diesem Fall in den freien Endbereichen an dem Gehäuse 9 anliegen.

Die Vorkammer 26 ist im Querschnitt begrenzt durch die Seiten- und Rückwand des Gehäuses 9 sowie die Trennwandung 24, wobei die Vorkammer 26 im Bereich der Längserstreckung der Zuführleitung 30 ergänzend durch diese begrenzt ist. Hingegen ist die Hauptkammer 27 durch die Trennwandung 24, die Seitenwandungen des Gehäuses 9 und die Brennerplatten 7 begrenzt.

Die Hauptkammer 27 verfügt in den Teilabschnitten 15, 16 über unterschiedliche U-förmige Querschnitte, wobei eine Erstreckung der Hauptkammer 27 jeweils der Breite des Grundschenkels und der Seitenschenkels des U entspricht.

Im Bereich der Mitten 51a, 51b ist die Breite des Grundschenkels des U vorgegeben durch den Abstand des Grundschenkels 47 der Trennwandung 24 von den Brennerplatten 7. Dasselbe gilt in dem Teilabschnitt 15, so dass in den Mitten 51a, 51b die Hauptkammer 27 in den Teilabschnitten 15, 16 in den dargestellten Querschnitten identisch ausgebildet ist.

Hingegen sind die Seitenschenkel des von der Hauptkammer 27 gebildeten U in den Teilabschnitten 15, 16 unterschiedlich ausgebildet: So sind die Seitenschenkel des U im Bereich des Teilabschnitts 16 länger ausgebildet als im Bereich des Teilabschnitts 15. Die Seitenschenkel des U sind in den Teilabschnitten 15, 16 jeweils in Richtung von dem Grundschenkel des U weg mit einer sich verringernden Breite ausgebildet, während sich in dem Teilabschnitt 16 an diese Teilbereiche mit verringerter Breite noch parallel zueinander orientierte Teilbereiche mit konstanter Breite anschließen, was aus der zuvor erläuterten Formgebung der Trennwandung 24 resultiert. In dem Bereich der Mitten 51a, 51b sowie zwischen dem Grundschenkel 47 der Trennwandung 24 und den Brennerplatten 7 ist nur ein minimaler Spalt vorhanden oder der Abstand derselben ist um einen Faktor von mindestens 5, 10 oder 20 kleiner als die Breite der Seitenschenkel des U-förmigen Querschnitts der Hauptkammer 27.

In Fig. 8 und Fig. 9 ist des Weiteren zu erkennen, dass in beiden Teilabschnitten 15, 16 die Seitenschenkel des U-förmigen Querschnitts der Hauptkammer 27 lateral einen Teilquerschnitt der Vorkammer 26 einschließen.

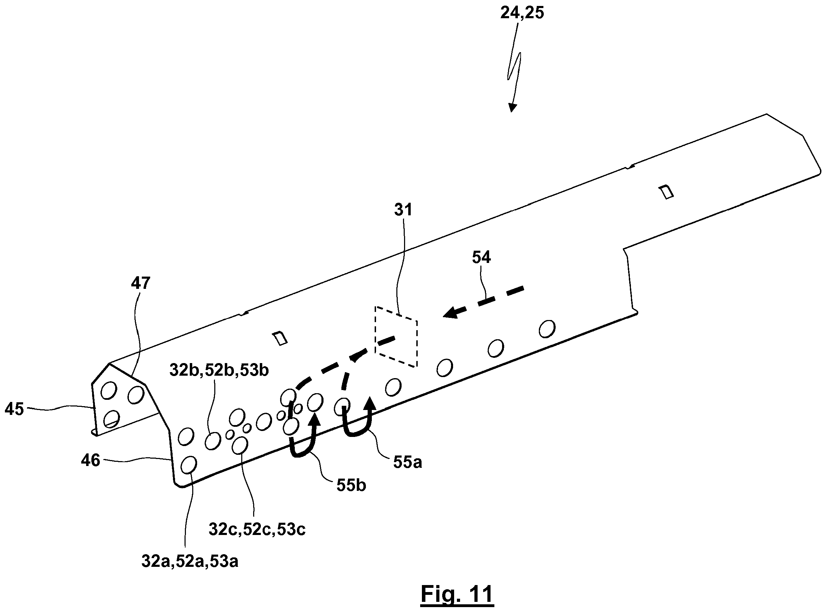

Aus der räumlichen Darstellung der als Blech 25 ausgebildeten Trennwandung 24 in **Fig. 11** ist zu erkennen, dass hier die Übertrittsquerschnitte 32a, 32b, ... als Ausnehmungen 52 in Form von Bohrungen 53 ausgebildet sind. Hierbei verfügen die Bohrungen 53 je nach Bedarf über unterschiedliche Durchmesser und/oder Flächendichten.

In Fig. 11 ist schematisch die Eintrittsöffnung 31 der Zuführleitung 30 gestrichelt dargestellt. In Ausströmrichtung des Mischgases, also in montierter Stellung nach unten, nimmt die Zahl der Bohrungen und die Flächendichte derselben zu. Die Übertrittsquerschnitte 32 in Form der Ausnehmungen 52 sind ausschließlich in dem Teilabschnitt 16 vorgesehen, während in dem Teilabschnitt 15 keinerlei derartige Übertrittsquerschnitte vorgesehen sind. Die Übertrittsquerschnitte 32 sind dabei im Bereich der parallelen Seitenschenkelteile 49a, 49b der Trennwandung 24 angeordnet. Für den aus Fig. 10 ersichtlichen Einbauzustand der Trennwandung 24 in der Mischgas-Kammer 14 ist zu erkennen, dass sich weitere Übertrittsquerschnitte 33 zwischen der Trennwandung 24 und dem Gehäuse 9 ergeben, nämlich ein Übertrittsquerschnitt 33a der nach unten weisenden Stirnseite der Trennwandung 24 gegenüber einem Bodenblech des Gehäuses 9, ein Übertrittsquerschnitt 33b zwischen der Stufenwandung 22 und dem oberen Ende der Seitenschenkelteile 49a, 49b sowie ein Übertrittsquerschnitt 33c zwischen der oberen Stirnseite der Trennwandung 24 und dem Deckel des Gehäuses 9.

Ein Strom 54 des Mischgases wird einerseits in Richtung der Längserstreckung der Grilleinheit 3 aufgeteilt in mehrere Teilströme 55a, 55b, 55c, ..., die jeweils bei unterschiedlichen Längserstreckungen durch einen zugeordneten Übertrittsquerschnitt 32a, 32b, ... hindurchtreten. Somit erfolgt einerseits eine Aufteilung des Stroms 54 in Richtung der Längserstreckung in einzelne Teilströme 55a, 55b, 55c, .... Andererseits erfolgt auch eine Aufteilung des Stroms 54 bzw. der Teilströme 55a, 55b, ... in Querrichtung in Teilströme 56a, 56b. Die Teilströme 56a, 56b treten mit auseinander gerichteten Strömungskomponenten durch auf gegenüberliegenden Seiten von der Trennwandung 24 ausgebildete Übertrittsquerschnitte 32a, 32b, ... hindurch und strömen somit auf unterschiedlichen Seiten in die Hauptkammer 27 ein (vgl. Fig. 8). Hingegen erfolgt ein Eintritt des Mischgases in die Hauptkammer 27 in dem Teilabschnitt 15 ausschließlich von der Hauptkammer 27 in dem Teilabschnitt 16 und über die Übertrittsquerschnitte 33b, 33c.

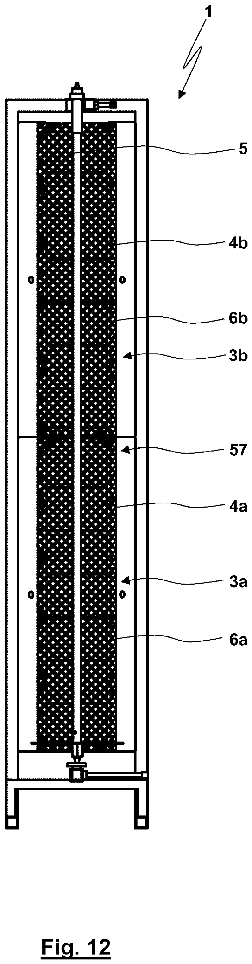

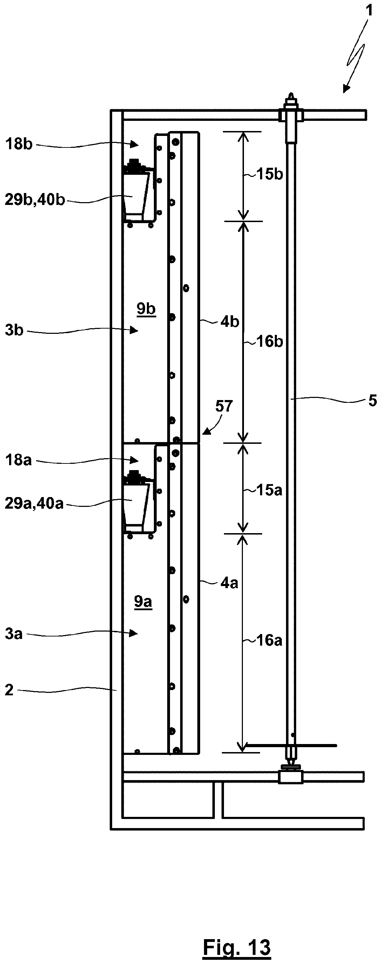

In **Fig. 12** **und** **13** ist ein Drehspieß-Gasgrillgerät 1 dargestellt, bei dem zwei Grilleinheiten 3a, 3b mit fluchtenden Längserstreckungen vertikal übereinander angeordnet sind. Die Grillflächen 4a, 4b der Grilleinheiten 3a, 3b ergänzen sich dabei zu einer durchgehenden, ebenen Gesamt-Grillfläche 57. In der Seitenansicht gemäß Fig. 13 ist zu erkennen, dass die Freiräume 18a, 18b, in denen die Komponenten 40a, 40b, hier die Mischeinheiten 29a, 29b, angeordnet sind, vertikal übereinander und fluchtend angeordnet sind. Die Mischeinheiten 29a, 29b werden dabei über ein Leitungssystem mit parallelen Zweigleitungen mit dem Brenngas versorgt.

Gemäß dem in den Fig. 12 und 13 dargestellten Ausführungsbeispiel sind die beiden Grilleinheiten 3a, 3b in derselben vertikalen Orientierung übereinander angeordnet. Somit befinden sich die Mischeinheiten 29a, 29b jeweils im oberen Endbereich der beiden Grilleinheiten 3a, 3b. Möglich ist für eine abgewandelte Ausführungsform auch, dass die beiden Geldeinheiten 3a, 3b (oder mehrere derartige Paare von Grilleinheiten 3) in um 180° gedrehter vertikaler Orientierung miteinander kombiniert sind, wobei dann bei der unteren Grilleinheit 3a die Mischeinheit 29a im oberen Endbereich der Grilleinheit 3a angeordnet ist, während die Mischeinheit 29b der oberen Grilleinheit 3b im unteren Endbereich der Grilleinheit 3b angeordnet ist. Diese Ausführungsform hat den Vorteil, dass nicht die Zuführung des Brenngases zu dem Grilleinheiten 3a, 3b in unterschiedlichen Höhen durch separate Gasleitungen erfolgen muss, sondern vielmehr die Zuführung des Brenngases über eine gemeinsame Gasleitung erfolgen kann, die dann lediglich unmittelbar benachbart den Mischeinheiten 29a, 29b zu diesen verzweigen kann.

### BEZUGSZEICHENLISTE

- 1: Drehspieß-Gasgrillgerät
- 2: Rahmen
- 3: Grilleinheit
- 4: Grillfläche
- 5: Grillspieß
- 6: Verbrennungsgitter
- 7: Brennerplatte
- 8: Gehäusebereich
- 9: Gehäuse
- 10: Innenraum
- 11: Längserstreckung
- 12: Quererstreckung
- 13: Tiefe
- 14: Mischgas-Kammer
- 15: Teilabschnitt
- 16: Teilabschnitt
- 17: Tiefe
- 18: Freiraum
- 19: Rückwand
- 20: Rückwandteil
- 21: Rückwandteil
- 22: Stufenwandung
- 23: Stufe
- 24: Trennwandung
- 25: Blech
- 26: Vorkammer
- 27: Hauptkammer
- 28: Anschluss
- 29: Mischeinheit
- 30: Zuführleitung
- 31: Eintrittsöffnung
- 32: Übertrittsquerschnitt
- 33: Übertrittsquerschnitt
- 34: Trichter
- 35: Ringspalt
- 36: Befestigungsschraube
- 37: Abdeckplatte
- 38: laterale Öffnung
- 39: Strömungskanal
- 40: Komponente
- 41: Befestigungswinkel
- 42: Einschnürung
- 43: Querschnittserweiterung
- 44: Düse, Drossel
- 45: Seitenschenkel
- 46: Seitenschenkel
- 47: Grundschenkel
- 48: Seitenschenkelteil
- 49: Seitenschenkelteil
- 50: Abwinklung
- 51: Mitte
- 52: Ausnehmung
- 53: Bohrung
- 54: Strom
- 55: Teilstrom
- 56: Teilstrom
- 57: Gesamt-Grillfläche

## Patentansprüche

1. Drehspieß-Gasgrillgerät (1) mit
a) zwei oder mehr Grilleinheiten (3a, 3b, ...) mit jeweils
aa) einer Grillfläche (4),
ab) einer von einem Mischgas durchströmte Mischgas-Kammer (14) und
ac) mindestens einer Brennerplatte (7), die
- die Mischgas-Kammer (14) auf der der Grillfläche (4) zugewandten Seite begrenzt und
- für das in der Mischgas-Kammer (14) angeordnete Mischgas durchlässig ist,
ad) wobei die Mischgas-Kammer (14) in einem Teilabschnitt (15) eine verringerte Tiefe (17) aufweist und
ae) auf der der mindestens einen Brennerplatte (7) abgewandten Seite der Mischgas-Kammer (14) hinter dem Teilabschnitt (15) der Mischgas-Kammer (14) mindestens eine das Brenngas oder Mischgas führende und/oder aufbereitende Komponente (40) angeordnet ist,
wobei die Grilleinheiten (3a, 3b, ...) derart vertikal übereinander angeordnet sind, dass sich die Grillflächen (4a, 4b, ...) der Grilleinheiten (3a, 3b, ...) zu einer durchgehenden Gesamt-Grillfläche (57) ergänzen.

2. Drehspieß-Gasgrillgerät (1) nach Anspruch 1, wobei in den Grilleinheiten (3a, 3b, ...) die Mischgas-Kammer (14) durch eine Rückwand (19) begrenzt ist, welche an dem Übergang zu dem Teilabschnitt (15) eine Stufe (23) aufweist.

3. Drehspieß-Gasgrillgerät (1) nach Anspruch 1 oder 2, wobei in den Grilleinheiten (3a, 3b, ...) die oder eine Komponente (40), die hinter dem Teilabschnitt (15) angeordnet ist, eine Mischeinheit (29) ist, in welcher ein Brenngas mit Umgebungsluft zu dem für die Mischgas-Kammer (14) bestimmten Mischgas gemischt wird.

4. Drehspieß-Gasgrillgerät (1) nach Anspruch 3, wobei in den Grilleinheiten (3a, 3b, ...) die Mischeinheit (29) einen eine laterale Öffnung (38) aufweisenden Strömungskanal (39) aufweist und das Brenngas in dem Strömungskanal (39) so an der lateralen Öffnung (38) vorbeigeführt wird, dass das Brenngas Umgebungsluft durch die laterale Öffnung (38) mitnimmt und die Umgebungsluft mit dem Brenngas vermischt wird.

5. Drehspieß-Gasgrillgerät (1) nach Anspruch 4, wobei in den Grilleinheiten (3a, 3b, ...) die Mischeinheit (29) einen Trichter (34) und eine Abdeckplatte (37) aufweist, welche unter Ausbildung eines Ringspaltes (35), der die laterale Öffnung (38) bildet, beabstandet von dem Trichter (34) angeordnet ist.

6. Drehspieß-Gasgrillgerät (1) nach einem der vorhergehenden Ansprüche,
wobei die Grilleinheiten (3) jeweils
a) bei Verwendung eines Gases in Form eines Flüssiggases oder eines Erdgases eine Heizleistung haben, die größer als 7,0 kW ist und/oder
b) eine Grillfläche (4) haben, deren Fläche größer als 400 cm² ist.

7. Drehspieß-Gasgrillgerät (1) nach einem der vorhergehenden Ansprüche,
wobei in den Grilleinheiten (3a, 3b, ...)
a) die Mischgas-Kammer (14) durch eine Trennwandung (24) in eine Vorkammer (26) und eine stromabwärts der Vorkammer (26) angeordnete Hauptkammer (27) unterteilt ist und
b) die Vorkammer (26) über Übertrittsquerschnitte (32) der Trennwandung (24) und/oder Übertrittsquerschnitte (33) zwischen der Trennwandung (24) und einem Gehäuse (9) mit der Hauptkammer (27) verbunden ist.

8. Drehspieß-Gasgrillgerät (1) nach Anspruch 7, wobei sich in den Grilleinheiten (3a, 3b, ...)
a) eine Größe der Übertrittsquerschnitte (32) und/oder
b) eine Flächendichte der Übertrittsquerschnitte (32), die in einer Teilfläche das Verhältnis der Fläche der Übertrittsquerschnitte (32) der Trennwandung (24) zu der Fläche dieser Teilfläche beschreibt,
über die Längserstreckung verändert.

9. Drehspieß-Gasgrillgerät (1) nach Anspruch 8, wobei in den Grilleinheiten (3a, 3b, ...) die Vorkammer (26) eine Eintrittsöffnung (31) für das Mischgas aufweist und sich die Größe und/oder Flächendichte der Übertrittsquerschnitte (32) in Strömungsrichtung des Mischgases aus der Eintrittsöffnung (31) mit zunehmender Entfernung von der Eintrittsöffnung (31) vergrößern.

10. Drehspieß-Gasgrillgerät (1) nach Anspruch 8 oder 9, wobei in den Grilleinheiten (3a, 3b, ...) die Trennwandung (24) mit einem Blech (25) gebildet ist und die Übertrittsquerschnitte (32) von Bohrungen (53) oder Ausnehmungen (52) des Bleches (25) ausgebildet sind, deren Größe und/oder Flächendichte sich über die Längserstreckung verändert.

11. Drehspieß-Gasgrillgerät (1) nach einem der Ansprüche 7 bis 10, wobei in den Grilleinheiten (3a, 3b, ...) stromaufwärts der oder einer Eintrittsöffnung (31) der Vorkammer (26) eine düsenartige oder trichterartige Zuführleitung (30) angeordnet ist.

12. Drehspieß-Gasgrillgerät (1) nach einem der Ansprüche 7 bis 11, wobei in den Grilleinheiten (3a, 3b, ...) die oder eine Eintrittsöffnung (31) im Bereich von 20% bis 80% der Längserstreckung der Vorkammer (26) angeordnet ist.

13. Drehspieß-Gasgrillgerät (1) nach einem der Ansprüche 7 bis 12, wobei in den Grilleinheiten (3a, 3b, ...)
a) die Mischgas-Kammer (14) zumindest in einem Teil ihrer Längserstreckung einen rechteckigen Querschnitt aufweist,
b) die Hauptkammer (27) in dem rechteckigen Querschnitt U- oder V-förmig ausgebildet ist, wobei Seitenschenkel des U oder V zumindest einen Teilquerschnitt der Vorkammer (26) lateral einschließen und an den Grundschenkel des U oder den Scheitelpunkt des V die mindestens eine Brennerplatte (7) angrenzt.

14. Drehspieß-Gasgrillgerät (1) nach einem der Ansprüche 7 bis 13, wobei in den Grilleinheiten (3a, 3b, ...)
a) die Hauptkammer(27) in einem ersten Querschnitt in dem Teilabschnitt (15) der Mischgas-Kammer (14) mit der verringerten Tiefe (17) in der Mitte (51a) eine Erstreckung in Richtung der Brennerplatte (7) aufweist, die ungefähr einer Erstreckung der Hauptkammer (27) in einem zweiten Querschnitt in dem anderen Teilabschnitt (16) der Mischgas-Kammer (14) in der Mitte (51b) in Richtung der Brennerplatte (7) entspricht und/oder
b) die Hauptkammer (27) in dem ersten Querschnitt außen eine Erstreckung in Richtung der Brennerplatte (7) aufweist, die kleiner ist als die die Erstreckung der Hauptkammer (27) in dem zweiten Querschnitt außen in Richtung der Brennerplatte (7).

15. Drehspieß-Gasgrillgerät (1) nach einem der Ansprüche 7 bis 14, wobei in den Grilleinheiten (3a, 3b, ...) ein Strom (54) des Mischgases von der Vorkammer (26) in zwei Teilströme (56a, 56b) verzweigt, die auf gegenüberliegenden Seiten mit auseinander gerichteten Strömungskomponenten in die Hauptkammer (27) einströmen.

16. Drehspieß-Gasgrillgerät (1) nach einem der vorhergehenden Ansprüche, wobei
a) die Längserstreckung der Grilleinheiten (3) größer ist als die Quererstreckung der Grilleinheiten (3),
b) die oder eine Zuführleitung (30), aus welcher das Mischgas in eine oder die Vorkammer (26) oder die Mischgas-Kammer (14) strömt, in Richtung der Längserstreckung orientiert ist,
c) die Längserstreckung der Grilleinheiten (3) vertikal orientiert ist.

## Claims

1. Rotating spit gas grilling device (1) comprising
a) at least two grilling units (3a, 3b, ...) each comprising
aa) a grilling area (4),
ab) a mixed gas chamber (14) through which a mixed gas streams and
ac) at least one burner plate (7) which
- delimits the mixed gas chamber (14) on the side facing towards the grilling area (4) and
- is permeable for the mixed gas arranged in the mixed gas chamber (14),
ad) the mixed gas chamber (14) comprising a sub-section (15) having a reduced depth and
ae) on the side of the mixed gas chamber (14) facing away from the at least one burner plate (7) behind the sub-section (15) of the mixed gas chamber (14) at least one component (40) guiding the burning gas or mixed gas and/or processing the burning gas or mixed gas being arranged,
**wherein** the grilling units (3a, 3b, ...) are arranged vertically above one another in a way such that the grilling areas (4a, 4b, ...) of the grilling units (3a, 3b, ...) completing to a continuous total grilling area (57).

2. Rotating spit gas grilling device (1) of claim 1, **wherein** in the grilling units (3a, 3b, ...) the mixed gas chamber (14) is limited by a rear wall (19) which has a step (23) at the transition to the sub-section (15).

3. Rotating spit gas grilling device (1) of claim 1 or 2, **wherein** in the grilling units (3a, 3b, ...) the or a component (40) being arranged behind the sub-section (15) is a mixing unit (29) wherein a burning gas is mixed with environmental air to the mixed gas which is designated for the mixing gas chamber (14).

4. Rotating spit gas grilling device (1) of claim 3, **wherein** in the grilling units (3a, 3b, ...) the mixing unit (29) comprises a streaming channel (39) which has a lateral opening (38) and the burning gas streams besides the lateral opening (38) in the streaming channel (39) in a way such that the burning gas collects environmental air through the lateral opening (38) and the environmental air is mixed with the burning gas.

5. Rotating spit gas grilling device (1) of claim 4, **wherein** in the grilling units (3a, 3b, ...) the mixing unit (29) comprises a funnel (34) and a cover plate (37) which is arranged with a distance from the funnel (34) under the formation of an annular gap (35) which forms the lateral opening (38).

6. Rotating spit gas grilling device (1) of one of the preceding claims, **wherein** the grilling units (3) each
a) have a heating power being higher than 7.0 kW when using a gas embodied as a liquid gas or natural gas and/or
b) have a grilling area (4) being larger than 400 cm².

7. Rotating spit gas grilling device (1) of one of the preceding claims, **wherein** in the grilling units (3a, 3b, ...)
a) the mixed gas chamber (14) is divided by a separating wall (24) into a pre-chamber (26) and a main chamber (27) arranged upstream from the pre-chamber (26) and
b) the pre-chamber (26) is connected to the main chamber (27) by transition cross-sections (32) of the separating wall (24) and/or transition cross-sections (33) between the separating wall (24) and a housing (9).

8. Rotating spit gas grilling device (1) of claim 7, **wherein** in the grilling units (3a, 3b, ...)
a) the size of the transition cross-sections (32) and/or
b) the area density of the transition cross-sections (32) which in a sub-area describes the ratio of the area of the transition cross-sections (32) of the separating wall (24) and the area of the sub-section
changes over the longitudinal extension.

9. Rotating spit gas grilling device (1) of claim 8, **wherein** in the grilling units (3a, 3b, ...) the pre-chamber (26) comprises an inlet opening (31) for the mixed gas and the size and/or area density of the transition cross-sections (32) increases in streaming direction of the mixed gas from the inlet opening (31) with increasing distance from the inlet opening (31).

10. Rotating spit gas grilling device (1) of claim 8 or 9, **wherein** in the grilling units (3a, 3b, ...) the separating wall (24) is formed by a metal sheet (25) and the transition cross-sections (32) are embodied as bores (53) or recesses (52) of the metal sheet (25), the size and/or area density of the bores (53) or recesses (52) changing over the longitudinal extension.

11. Rotating spit gas grilling device (1) of one of claims 7 to 10, **wherein** in the grilling units (3a, 3b, ...) upstream from the or an inlet opening (31) of the pre-chamber (26) a jet-like or funnel-like supply line (30) is arranged.

12. Rotating spit gas grilling device (1) of one of claims 7 to 11, **wherein** in the grilling units (3a, 3b, ...) the or an inlet opening (31) is arranged in the region of 20 % to 80 % of the longitudinal extension of the pre-chamber (26).

13. Rotating spit gas grilling device (1) of one of claims 7 to 12, **wherein** in the grilling units (3a, 3b, ...)
a) the mixed gas chamber (14) at least in a part of its longitudinal extension comprises a rectangular cross-section,
b) the main chamber (27) is U-shaped or V-shaped in the rectangular cross-section, side legs of the U or V at least partially laterally enclosing a part of the cross-section of the pre-chamber (26) and at least one burner plate (7) adjoining to the base leg of the U or the tip of the V.

14. Rotating spit gas grilling device (1) of one of claims 7 to 13, **wherein** in the grilling units (3a, 3b, ...)
a) in the sub-section (15) of the mixed gas chamber (14) having a reduced depth (17) in a first cross-section in the middle (51a) the main chamber (27) comprises an extension towards the burner plate (7) which proximately corresponds to an extension of the main chamber (27) towards the burner plate (7) in a second cross-section in the other sub-section (16) of the mixed gas chamber (14) in the middle (51b) and/or
b) on the outer side the main chamber (27) in the first cross-section comprises an extension towards the burner plate (7) which is smaller than the extension of the main chamber (27) in the second cross-section on the outer side towards the burner plate (7).

15. Rotating spit gas grilling device (1) of one of claims 7 to 14, **wherein** in the grilling units (3a, 3b, ...) a stream (54) of the mixed gas branches from the pre-chamber (26) into two substreams (56a, 56b) which stream on opposite sides into the main chamber (27) with streaming components directed away from each other.

16. Rotating spit gas grilling device (1) of one of the preceding claims, **wherein** in the grilling units (3a, 3b, ...)
a) the longitudinal extension of the grilling units (3) is larger than the transverse extension of the grilling units (3),
b) the or a supply line (30) from which the mixed gas streams into a or the pre-chamber (26) or into the mixed gas chamber (14) has an orientation along the longitudinal extension,
c) the longitudinal extension of the grilling units (3) have an orientation in vertical direction.

## Revendications

1. Barbecue à tournebroche (1) avec
a) deux unités de gril ou plus (3a, 3b, ...) avec chacune
aa) une surface de gril (4),
ab) une chambre de mélange de gaz (14) traversée par un mélange de gaz et
ac) au moins une plaque de brûleur (7) qui
- limite la chambre de mélange de gaz (14) sur le côté orienté vers la surface de gril (4) et
- est perméable au mélange de gaz disposé dans la chambre de mélange de gaz (14),
ad) dans lequel la chambre e mélange de gaz (14) présente, dans une partie (15), une profondeur (17) réduite et
ae) sur le côté de la chambre de mélange de gaz (14) opposé à l'au moins une plaque de brûleur (7), derrière la partie (15) de la chambre de mélange de gaz (14), est disposé au moins un composant (40) guidant et/ou préparant le gaz combustible ou le mélange de gaz,
**dans lequel** les unités de gril (3a, 3b, ...) sont superposées verticalement de façon à ce que les surfaces de gril (4a, 4b, ...) des unités de gril (3a, 3b, ...) se complètent afin de former une surface de gril globale (57).

2. Barbecue à tournebroche (1) selon la revendication 1, **dans lequel,** dans les unités de gril (3a, 3b, ...), la chambre de mélange de gaz (14) est limitée par une paroi arrière (19) qui comprend un épaulement (23) au niveau de la transition avec la partie (15).

3. Barbecue à tournebroche (1) selon la revendication 1 ou 2, **dans lequel,** dans les unités de gril (3a, 3b, ...), le ou un composant (40), qui est disposé derrière la partie (15), est une unité de mélange (29) dans laquelle un gaz combustible est mélangé avec de l'air ambiant afin d'obtenir le mélange de gaz approprié pour la chambre de mélange de gaz (14).

4. Barbecue à tournebroche (1) selon la revendication 3, **dans lequel,** dans les unités de gril (3a, 3b, ...), l'unité de mélange (29) comprend un canal d'écoulement (39) comprenant une ouverture latérale (38) et le gaz combustible est guidé dans le canal d'écoulement (39) vers l'ouverture latérale (38) de façon à ce que le gaz combustible entraîne l'air ambiant à travers l'ouverture latérale (38) et à ce que l'air ambiant soit mélangé avec le gaz combustible.

5. Barbecue à tournebroche (1) selon la revendication 4, **dans lequel,** dans les unités de gril (3a, 3b, ...), l'unité de mélange (29) comprend un entonnoir (34) et une plaque de recouvrement (37) qui est disposée à une certaine distance de l'entonnoir (34) en formant une fente annulaire (35) qui constitue l'ouverture latérale (38).

6. Barbecue à tournebroche (1) selon l'une des revendications précédentes, **dans lequel** les unités de gril (3)
a) présentent chacune, lors de l'utilisation d'un gaz sous la forme d'un gaz liquide ou d'un gaz naturel, une puissance de chauffage supérieure à 7,0 kW et/ou
b) présentent chacune une surface de gril (4) dont la superficie est supérieure à 400 cm².

7. Barbecue à tournebroche (1) selon l'une des revendications précédentes, **dans lequel,** dans les unités de gril (3a, 3b, ...)
a) la chambre de mélange de gaz (14) est divisée par une paroi de séparation (24) en une pré-chambre (26) et une chambre principale (27) disposée en aval de la pré-chambre (26) et
b) la pré-chambre (26) est reliée avec la chambre principale (27) par l'intermédiaire de sections de passage (32) de la paroi de séparation (24) et/ou de sections de passage (33) entre la paroi de séparation (24) et un boîtier (9).

8. Barbecue à tournebroche (1) selon la revendication 7, **dans lequel,** dans les unités de gril (3a, 3b, ...),
a) une taille des sections de passage (32) et/ou
b) une densité surfacique des sections de passage (32), qui décrit, dans une surface partielle, le rapport entre la superficie des sections de passage (32) de la paroi de séparation (24) et la superficie de cette surface partielle,
varie sur l'extension longitudinale.

9. Barbecue à tournebroche (1) selon la revendication 8, **dans lequel,** dans les unités de gril (3a, 3b, ...), la pré-chambre (26) comprend une ouverture d'entrée (31) pour le mélange de gaz et la taille et/ou la densité surfacique des sections de passage (32) augmentent dans la direction d'écoulement du mélange de gaz hors de l'ouverture d'entrée (31) lorsque la distance par rapport à l'ouverture d'entrée (31) augmente.

10. Barbecue à tournebroche (1) selon la revendication 8 ou 9, **dans lequel,** dans les unités de gril (3a, 3b, ...), la paroi de séparation (24) est constituée d'une tôle (25) et les sections de passage (32) sont réalisées à l'aide de perçages (53) ou d'évidements (52) dans la tôle (25), dont la taille et/ou la densité surfacique varient sur l'extension longitudinale.

11. Barbecue à tournebroche (1) selon l'une des revendications 7 à 10, **dans lequel,** dans les unités de gril (3a, 3b, ...), en amont de l'ouverture ou d'une ouverture d'entrée (31) de la pré-chambre (26), est disposée une conduite d'alimentation (30) en forme de buse ou d'entonnoir.

12. Barbecue à tournebroche (1) selon l'une des revendications 7 à 11, **dans lequel,** dans les unités de gril (3a, 3b, ...), l'ouverture ou une ouverture d'entrée (31) est disposée au niveau de 20 % à 80 % de l'extension longitudinale de la pré-chambre (26).

13. Barbecue à tournebroche (1) selon l'une des revendications 7 à 12, **dans lequel,** dans les unités de gril (3a, 3b, ...),
a) la chambre de mélange de gaz (14) présente, au moins dans une partie de son extension longitudinale, une section transversale rectangulaire,
b) la chambre principale (27) présente, dans la section transversale rectangulaire, une forme de U ou de V, dans laquelle les branches latérales du U ou du V incluent latéralement au moins une partie de la section de la pré-chambre (26) et l'au moins une plaque de brûleur (7) est adjacente aux branches de base du U ou au sommet du V.

14. Barbecue à tournebroche (1) selon l'une des revendications 7 à 13, **dans lequel,** dans les unités de gril (3a, 3b, ...),
a) la chambre principale (27) présente, dans une première section transversale, dans la partie (15) de la chambre de mélange de gaz (14) avec la profondeur réduite (17), au centre (51a), une extension en direction de la plaque de brûleur (7), qui correspond approximativement à une extension de la chambre principale (27) dans une deuxième section transversale dans l'autre partie (16) de la chambre de mélange de gaz (14) au centre (51b) en direction de la plaque de brûleur (7) et/ou
b) la chambre principale (27) présente, dans la première section transversale, à l'extérieur, une extension en direction de la plaque de brûleur (7), qui est inférieure à l'extension de la chambre principale (27) dans la deuxième section transversale à l'extérieur en direction de la plaque de brûleur (7).

15. Barbecue à tournebroche (1) selon l'une des revendications 7 à 14, **dans lequel,** dans les unités de gril (3a, 3b, ...), un flux (54) du mélange de gaz de la pré-chambre (26) se divise en deux flux partiels (56a, 56b) qui entrent dans la chambre principale (27) sur des côtés opposés avec des composantes d'écoulement divergentes.

16. Barbecue à tournebroche (1) selon l'une des revendications précédentes, **dans lequel,**
a) l'extension longitudinale des unités de gril (3) est supérieure à l'extension transversale des unités de gril (3),
b) la ou une conduite d'alimentation (30), à partir de laquelle le mélange de gaz s'écoule dans une ou la pré-chambre (26) ou la chambre de mélange de gaz (14), est orientée dans la direction de l'extension longitudinale,
c) l'extension longitudinale des unités de gril (3) est orientée verticalement.
